# EUROPEAN PATENT APPLICATION

(11) **EP 4 086 295 A1**
(43) Date of publication of application: **09.11.2022**
(21) Application number: 21172909.0
(22) Date of filing: 08.05.2021
(51) Int. Cl.: C08G 8/06, B27N 3/00, B32B 21/14, C08H 7/00, C08L 97/02, C09J 161/06, C09J 161/12

(54) **RESINS FROM ALDEHYDES AND ORGANIC ALDEHYDE-REACTIVE COMPOUNDS**

(71) Applicant: Prefere Resins Holding GmbH, 15537 Erkner (DE)
(72) Inventor: DÜCK, Klaus, 15732 Schulzendorf (DE); FLIEDNER, Elke, 12527 Berlin (DE); SCHWAB, Michael, 58460 Iserlohn (DE)
(74) Representative: Deckers, Hellmuth Alexander

(57) **Abstract**

This invention relates to a resin made from an aldehyde component which comprises 5-hydroxymethyl furfural ("HMF"), and a reactive aromatic compound which comprises lignin, characterised in that the HMF is a mixture comprising monomeric 5-hydroxymethyl furfural, and oligomers of HMF wherein the mass fraction of oligomers in the HMF is not more than 1 %, based on the sum of masses of the HMF monomer and the masses of the HMF oligomers present in the said mixture, and methods of use of these resins as binders and adhesives for inorganic and organic materials including wood, engineered wood, paper, cardboard, stone, concrete, plaster, thermoplastic and duroplastic polymers, metals, textiles, fibres including also carbon fibres, nonwovens, felts, leather, ceramics, and glass.

## Description

### Field of the Invention

This invention is directed to resins made from aldehydes and organic aldehyde-reactive compounds.

### Background of the Invention

Resins made from aldehydes and organic aldehyde-reactive compounds have been described, particularly, the so-called phenolic resins from aldehydes and phenolic compounds such as phenol itself, and other activated aromatic compounds, see, e.g. C. Ellis, The Chemistry of Synthetic Resins, New York 1935, pages 277 to 488. An activated aromatic compound, as used herein, is defined as an organic compound that has at least one aromatic C-H group, where the carbon atom C is a part of an aromatic carbocyclic or heterocyclic ring, which ring bears a hydroxyl or alkoxy group at another carbon atom in ortho (immediately adjacent) or para (with an even number of carbon atoms in between) position.

Apart from formaldehyde, the use of other aldehydes such as acetaldehyde, butyraldehyde, and acrolein has also been mentioned (ibid.). The use of higher aldehydes is also mentioned in Ullmann's Encyclopedia of Chemical Industry, 5th ed. 1991, vol. A19, Phenolic Resins, chapter 3.2, pages 374 and 375 - Aldehydes, particularly, butyraldehyde, benzaldehyde, salicylaldehyde, acrolein, crotonaldehyde, acetaldehyde and glyoxal. Other resins, the so-called amino resins, are made by reacting aldehydes with organic compounds having amino, imino, or amide groups. These compounds are frequently referred to as aminoplast formers. Well-known examples of these resins are urea-formaldehyde resins and melamine-formaldehyde resins.

The need to reduce formaldehyde emissions and to at least partially replace phenol by renewable raw materials, as well as the search for low energy processes for the synthesis of the components, and the production of the resin therefrom have led to efforts for the development of new chemistry and technology in the resins business. It is therefore an object of the invention to provide components that are able to replace partially or completely the phenol and aldehyde components in phenolic resins, and the aminoplast formers and aldehyde components in amino resins while maintaining the desired properties of the resins so formed.

Many efforts have been made to at least partially replace phenols by lignin materials that stem from the cellulose and paper industry, in phenolic resins. Lignin is a naturally occurring organic compound that fulfils the definition of an activated aromatic compound. See, e. g., P. Solt et al., "Lignin Phenol Formaldehyde Resoles Using Base-Catalysed Depolymerised Kraft Lignin", Polymers 2018, 10, 1162, S. Kalami et al., "Replacing 100 % of Phenol in Phenolic Adhesive Formulations with Lignin", J. Appl. Polym. Sci. 2017, 45124, and WO 2021/005 270 A1.

Lignins are generally classified into the groups of softwood, hardwood, and grass lignins. These native lignins are typically separated from the wood or other lignocelluloses in the form of "milled wood lignin" (MWL), "dioxane lignin", or "enzymatically liberated lignin". Industrially based technical lignins are by-products of chemical pulping: Kraft lignin (or sulphate lignin), alkali lignin (or soda lignin), and lignosulphonates are derived from the Kraft, the soda-anthraquinone, and sulphite pulping processes of lignocellulose. These pulping processes are directed to isolate the fibrous material (cellulose) from the lignocellulose. A further lignin source is the so-called acid hydrolysis lignin which is still mostly converted to pellets for firing. Other lignin grades have been made accessible by newer processes, viz., the organosolv process which provides a sulphur-free high purity lignin grade, and the hydrolysis process which is acid-catalysed and leads to formation of the so-called Hibbert ketones and of free phenolic moieties. Other emerging processes are the steam-explosion process and the ammonia-fibre expansion process. Any of these lignin materials may be used in the present invention.

Lignin materials provided by different sources and separated from the cellulose and hemicellulose accompanying materials in lignocellulose by the different processes as detailed supra differ from each other, not only in the composition with regard to the shares of 4-hydroxyphenyl-, guaiacyl- (3-methoxy-4-hydroxyphenyl-), and syringyl- (3,5-dimethyoxy-4-hydroxyphenyl-) units of the C₉-building blocks in lignin, which is different for gymnosperms (predominantly guaiacyl units), angiosperms (both guaiacyl and syringyl units), and grass (predominantly 4-hydroxylphenyl units) but also in the decomposition that follows different routes depending on the kind of pulping process. Therefore, the lignins obtained by the processes supra have also variations in the molar mass, as reported in "Molar mass determination of lignins by size-exclusion chromatography", S. Baumberger et al., Holzforschung 2007 (61), pages 459 to 468.

It is also possible to generate fractions of high molar mass lignin, and low molar mass lignin by fractionated precipitation, see WO 2013/144 453 A1. These lignin fractions may be collected, e. g., in a first mixture comprising substantially lignin oligomers and polymers of a low degree of polymerisation (hereinafter each individually, and all collectively referred to as low molar mass lignins, "LML") having from 1 to 10 monomer units, and in a second mixture comprising substantially lignin polymers (hereinafter collectively referred to as high molar mass lignins, "HML") having from 11 to 70 monomer units. Any larger number of mixtures, each comprising different groups of oligomers and polymers, may also be collected from the isolated fractions provided by controlled precipitation, or other separation processes. The molar masses of lignin can be determined according to the method described in Linping Wang et al., Holzforschung 2019; 73(4): 363 to 369, by size-exclusion chromatography of acetylated samples of the lignin fractions. These mixtures can be condensed individually with aldehydes, and mixed thereafter, or they can be condensed in sequence, and the addition time of phenol and aldehyde can be varied. In WO 2013/144 453 A1, variations of the condensation process lead to different levels of the possibility of substitution of phenol by lignin. Similar results have been obtained when using such lignin fractions prepared according to WO 2013/144 453 A1, together with H as aldehyde component, alone, or in mixture with other aldehydes. In the course of the investigations which have led to the present invention, more than two groups of lignin fractions have found to lead to good results. Therefore, it is also an embodiment of the invention to use at least two, preferably three or more, lignin fractions having different values of the average degree of polymerisation together with H as aldehyde component, alone, or in mixture with other aldehydes for the preparation of the resin according to the invention. The first of these groups comprises lignin oligomers having a degree of oligomerisation of from 1 to n, the second of these groups comprises lignin oligomers or polymers having a degree of oligomerisation or polymerisation of from n+1 to m, the third of these groups comprises lignin oligomers having a degree of oligomerisation or polymerisation of from m+1 to o, and the fourth of these groups comprises lignin oligomers or polymers having a degree of oligomerisation or polymerisation of o+1 or more. The degree of oligomerisation is the number of lignin monomer units in a oligomer or polymer molecule. Given an average molar mass of a phenylpropane monomer unit having one methoxy group of approximately 180 g/mol, useful values for n, m, and o, in the case of four groups, is n = 7, m = 14, o = 21. Other useful values are n = 8, m= 16, and o = 24, and increasing values of n, m, and o to 9, 18, 27; 10, 20, 30; 11, 22, 33; and 12, 24, 36; and so forth until 20, 40, 60.

Lower molar mass lignins which have higher reactivity can be obtained by controlled degradation, or decomposition. Several ways have been described in the literature, including enzymatic decomposition, oxydative cleavage, pyrolysis, and treatment with radical forming systems.

It is also possible to purify lignin from any of the sources mentioned, by a plethora of methods including ultrasonic extraction, solvent extraction, dialysis, and hot water treatment. It is particularly important to remove inorganic impurities such as sulphur which stems from the process chemicals.

The reactivity of lignin can be increased by various processes, including demethylation, methylolation/hydroxymethylation, phenolation/phenolysis, reduction, oxydation, hydrolysis, and alkalation. See, e.g. Hu, LiHong, et al., Bioresources 6(3), pages 3515 to 3525, and WO 2013/144 454 A1. These techniques have been used to improve purity and reactivity of the lignin samples used in this invention.

Other naturally occurring organic materials that comprise activated aromatic compounds are tannins. They are usually classified as gallotannin (GT) [1], ellagitannin (ET) [2], complex tannin (XT) [3], and condensed tannin (CT) [4], see Formulae [1] to [4] infra (from "Tannins: Classification and Definition", K. Khanbabaee and T. van Ree, Nat. Prod. Rep., 2001, 18, pages 641 to 649):

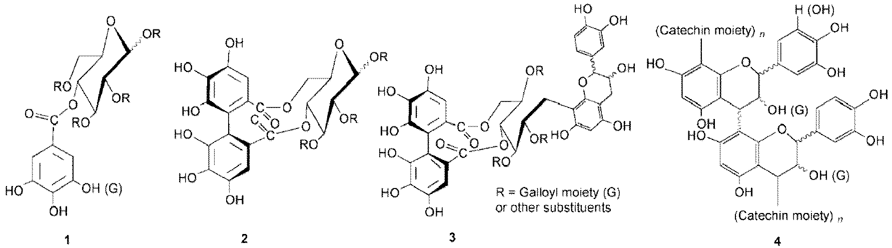

Other aldehydes have been used to replace formaldehyde, both in phenolic resins, and in amino resins. See, e. g., P. Solt et al., "Technological Performance of Formaldehyde-free Adhesive Alternatives for Particleboard Industry", Int. J. Adhesion and Adhesives 94 (2019), pp. 99 to 131.

Alternatives for both formaldehyde and phenol have been considered in P. R. Sarika et al., "Bio-Based Alternatives to Phenol and Formaldehyde for the Production of Resins", Polymers 2020, 12, 2237. Such alternatives are mainly lignin, tannin and cardanol which are used in place of, or together with, phenols, and furfural, 5-hydroxymethylfurfural, glyoxal, which are used in place of, or together with, formaldehyde.

A resin where both the aldehyde and the activated aromatic compound or the aminoplast former are derived from renewable sources would be desirable, in view of the reasons mentioned supra that lead to the object of the present invention. At least a substantial amount of the aldehyde used in the synthesis of the desired resin should be different from formaldehyde, and at least a substantial amount of the activated aromatic compound or aminoplast former used in the synthesis of the desired resin should be different from the phenols or aminoplast formers commonly used in the synthesis of phenolic resins and amino resins.

5-Hydroxymethyl furfural is an aldehyde which can be prepared from cellulose and cellulose-containing material by hydrolysis to glucose, isomerisation to fructose, and subsequent dehydration in attractive yields.

In EP 3 366 468 A1, a process for the preparation of thermally curable resins is described comprising a step where "a polycondensable phenolic compound and/or an aminoplast former is reacted with 5-hydroxymethylfurfural ("HMF") under conditions leading to formation of polycondensates wherein the HMF comprises at least one HMF oligomer" (claim 1). In a preferred embodiment, the mass fraction of HMF oligomers in the HMF component used is from 0.005 % to 100 %. No results from the determination of the mass fractions of such oligomers are disclosed; there is only a statement that the methods for such determination like high pressure liquid chromatography or nuclear magnetic resonance are known to a person skilled in the art (paragraph [0034]). In paragraph [0025], it is stated that the pH (apparently of the reaction mixture) may vary in a broad range, for example from 6 to 10, and preferably from 7 to 8.5. A person skilled in the art would choose alkaline conditions for hydroxymethylation (hydroxycycloalkylation in the case of using HMF as the aldehyde component), as taught in the chapter "4.1.1 Hydroxymethylation" of the "Amino Resins" article in "Ullmann's Encyclopedia of Industrial Chemistry", 5th edition 1985, Vol. A2, page 119, and acid conditions during the condensation step when alkylene (methylene in the case of formaldehyde) links between two aminoplast moieties are formed, as taught in the chapter 4.1.2 (loc. cit., page 120). It is noted that in the only example of this patent application, the reaction between urea and HMF is conducted at a pH of 2 during the whole reaction time, contrary to the general teaching in paragraph [0025]; only the temperature is varied: for the first two hours, it is 90 °C, and then "20 °C for several hours", see paragraph [0061].

In EP 3 366 714 A1 which claims the priority of EP 3 366 468 A1 (supra), a process is described for the preparation of thermally curable phenolic resins which comprises "the step of reaction of a polycondensable phenolic compound with 5-hydroxymethylfurfural (HMF) under conditions leading to formation of polycondensates wherein the HMF comprises at least one HMF oligomer, and wherein the reaction is conducted at a pH of more than 7 for more than sixty minutes" (claim1). These conditions are defined in the description as being known per se (paragraph [0019]), using known solvents which can be any liquid medium where polycondensates are formed. Preferred is a reaction in an aqueous solvent, especially in water. The alkaline pH can be adjusted by suitable bases at the start of the reaction step, such as alkali hydroxides, alkaline earth hydroxides, sodium carbonate, ammonia, and tertiary amines, sodium hydroxide being particularly suitable. Reaction times of more than sixty minutes at basic values of pH with HMF comprising at least one HMF oligomer are said to lead to phenolic resins having high bonding strength. The reaction is preferably conducted until the desired viscosity has been reached, or the reaction has ceased. Desired viscosities are said to be between 100 mPa·s and 1200 mPa·s, preferably more than 200 mPa·s, particularly preferred, more than 800 mPa·s, and especially preferred, more than 850 mPa·s. There is no mention of concentration of solute, nor of the solvent used in the measurement, for measuring such viscosity, nor of a temperature, nor of a shear rate. Preferred ranges for pH, reaction temperature, number of reaction steps, molar ratio of HMF to phenolic compound, mass fraction of oligomers in the HMF component, and degree of oligomerisation (average number of monomer units in the oligomer molecules) are stated in paragraphs [0023] to [0030]. In paragraphs [0035] to [0052], details regarding the assumed structure of the oligomers are disclosed, but no analytical evidence such as NMR data or mass spectroscopy data are disclosed that support the assumed structure with carbon-carbon bonds in the preferred oligomers which are said to differ from the ether, acetal and hemiacetal structures common in aldehyde oligomers. It is further stated (paragraph [00029]) that in a preferred embodiment, the mass fraction of oligomers in the HMF component is from 0.005 % to 10 %, preferably from 0.1 % to 8 %, and particularly preferred, from 2 % to 4 %. In the last sentence of this paragraph, it is stated that a mass fraction of up to (almost) 100 % is also comprised in that invention. According to the preferred embodiment described in paragraph [0030], the oligomer has from two to twenty monomer units, more preferred, from two to ten monomer units, and especially preferred, from two to four monomer units. As stated in paragraphs [0037] and [0038], the preferred oligomers have carbon-carbon bonds in their structure (and not only the ether, hemiacetal or acetal bonds resulting from the reaction of aldehyde and hydroxyl groups) which are said to be formed both in acid and alkaline conditions. When the proposed structures are considered, it is obvious that there are not more functional groups formed due to oligomerisation: from two molecules each having one aldehyde group and one primary hydroxyl group, adding up to a total of four reactive groups, the C-C bonded dimer structures formed (see have one remaining aldehyde group, two remaining primary hydroxyl groups, and one tertiary hydroxyl group which adds up to a total of four reactive groups. A tertiary hydroxyl group, as is known to a person skilled in the art, reacts slower than a primary hydroxyl group, as, in the formation of a hemiacetal or an acetal, the O-H bond of the alcohol is cleaved. Thus, by formation of a dimer having a C-C bond, one reactive aldehyde group is transformed to a much less reactive tertiary hydroxyl group. If dimers (and oligomers) are formed as hemiacetal structures, one primary hydroxyl group of the first monomer molecule and one aldehyde group of the second monomer molecule are transformed to a hemiacetal structure

HO - CH₂ - X¹ - CH(OH) - O - CH₂ - X² - CHO (formula 5)

which conserves one primary hydroxyl group, and one aldehyde group, X¹ and X² each standing for the furan-2,5-diyl group (Formula 6)

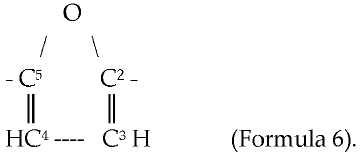

Higher oligomers having a degree of polymerisation of n and a hemiacetal structure may be formed in the same way, which obey the formula 7:

HO - CH₂ - [X¹ - CH(OH) - O - CH₂ -] ₙ₋₁ - X² - CHO (Formula 7).

Under acid catalysis, the secondary hydroxyl group of one or more of the entities in square brackets of the n-oligomer of formula 3 supra may be reacted with a hydroxymethyl group of another monomeric (m=1) or oligomeric (with degree of polymerisation m) HMF molecule under formation of a branched acetal (assumed to be formed on a terminal part of an oligomer in this example)

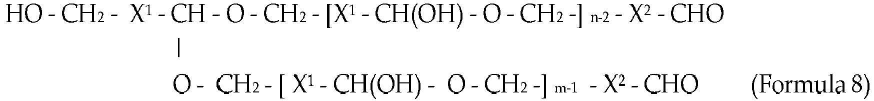

While hemiacetals form easily in an addition reaction, even without acid catalyst, formation of acetals requires addition of an acid catalyst, and removal of water.

The hydroxyl functionality of a hemiacetal oligomer of Formula 3 comprising n monomer units is equal to n, where only one primary hydroxyl group and n-1 (less reactive) secondary hydroxyl groups are present; the aldehyde functionality is always 1. The number of reactive aldehyde groups is thus drastically reduced in a hemiacetal oligomer; the number of aldehyde groups in an oligomer mixture of HMF having a certain mass is always smaller than the number of aldehyde groups in a sample of monomeric HMF having the same mass by a factor of n which is the (average) number of monomers in a mixture of oligomers.

In the acetal-hemiacetal oligomer of formula 4 comprising n+m monomer units, the hydroxyl functionality is 1 + (n-2) + (m-1) = m+n-2, only one of these being a primary hydroxyl group, and the aldehyde functionality is 2.

An ether according to formula 9 might be formed under consumption of the two hydroxymethyl groups from two molecules of H, usually under acid catalysis, 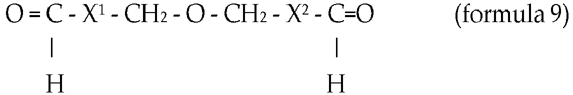 where X¹ and X² have the meaning of a furan-2,5-diyl group, see formula 5 supra. This condensation consumes two hydroxyl groups from the hydroxymethyl functional group under formation of an ether bond, and conserves the aldehyde groups. Only dimers can be formed in this way.

During the experiments which have led to the present invention, it has been found that for a combined addition and condensation reaction of 5-hydroxymethylfurfural (hereinafter referred to as "HMF") with lignin, no prior step of oligomerisation of the monomer is needed; on the contrary, a higher specific amount of substance *β*(A) of the reactive aldehyde groups, measured as the ratio *β*(A) = *n*(A)/ *m*(HMF) of the amount of substance *n*(A) of aldehyde groups and the mass *m*(HMF) of the HMF component is present in a sample comprising only monomers, compared to a sample comprising a mixture of monomer and oligomers as used in EP 3 366 468 A1 and EP 3 366 714 A1. Therefore, it is preferred to use HMF monomer, or a mixture with oligomers where the mass fraction of oligomers in the HMF component is zero or below the detection limit of about 0.05 %. This measurement has been made using a Waters gel permeation chromatograph using four "Ultra-Hydrogel^{®} DP" columns with a pore size of approximately 120 Å (12 nm) in series, at 25 °C and a flow rate of 0.8 ml/min, with 0.005 M H₂SO₄ (concentration of sulphuric acid: 0.005 mol/L) in water as solvent, and with a UV detector. A sample of HMF is said to comprise no oligomers in a mass fraction thereof that is higher that the detection limit means that there is no additional peak in the elugramme before the monomer peak which is higher than the height value of three times the usual baseline noise, which corresponds to a mass fraction of the lowest oligomer (dimer) of 0.05 % in the mixture of monomeric and oligomeric HMF.

Therefore, the use of monomeric HMF (hereinafter referred to as "H") is clearly preferred in the present invention. The expression "monomeric HMF" as used in this invention means that this quality of HMF has a content of oligomers which corresponds to a mass fraction of dimers in the HMF sample of less than 0.05 %, the mass fraction of higher oligomers being below the detection limit. Monomeric HMF (hereinafter referred to as "H") is used exclusively in the examples that are a part of the specification.

Resins from H with phenol ("P") alone, with alkylphenols alone, with other phenol derivatives including resorcinol, with lignin ("L") alone, with a tannin alone, with mixtures of phenol and alkylphenols, with mixtures of phenol and lignin, with mixtures of phenol and tannin, with mixtures of alkylphenols and lignin, with mixture of alkylphenols and tannin, with mixtures of lignin and tannin, as well as with mixtures of phenol, alkylphenols, and lignin, with mixtures of phenol, alkylphenols, and tannin, with mixtures of alkylphenols, lignin, and tannin, and with mixtures of phenol, alkylphenols, lignin, and tannin have been prepared, where m-cresol (MC), o-cresol (OC), and p-cresol (PC), 2,6-xylenol (XL), mixtures of these, as well as p-tert-butylphenol (BP), 4-isooctylphenol (OP), 4-nonylphenol (NP), and 4-hydroxybiphenyl (HP) have been used as alkylphenols, and one compound each of the tannin classes, viz., gallotannin (GT), ellagitannin (ET), complex tannin (XT), and condensed tannin (CT), see formulae 1 to 4 supra, and also mixtures of these, and also with any different lignin grades including Kraft lignin, soda lignin, lignosulphonates, Organosolv lignins, hydrolysis lignins, ionic liquid lignins, dioxane lignin, steam explosion lignin, and enzymatically liberated lignin as mentioned supra.

It was found in the experiments whereupon the present invention is based that alkylphenols, or mixtures of these with each other, or with phenol, form more homogeneous resins together with lignin, in an alkali-catalysed addition-condensation reaction, apparently due to the reduced functionality of alkylphenols which resembles the reduced functionality of lignin due to methoxy substitution on the aromatic nuclei.

Similar sets of resins have been made by using formaldehyde (hereinafter referred to as "F") alone, as aldehyde component, and mixtures of 5-hydroxymethylfurfural with formaldehyde, where mixtures were made with amount of substance-fractions of 20 %, 40 %, 60 %, and 80 % of formaldehyde, with amount of substance-fractions of 80 %, 60 %, 40 %, and 20 % of monomeric HMF, with phenol alone, with alkylphenols alone, with lignin alone, with tannin alone, with mixtures of phenol and alkylphenols, with mixtures of phenol and lignin, with mixtures of phenol and tannin, with mixtures of alkylphenols and lignin, with mixture of alkylphenols and tannin, with mixtures of lignin and tannin, as well as with mixtures of phenol, alkylphenols, and lignin, with mixtures of phenol, alkylphenols, and tannin, with mixtures of alkylphenols, lignin, and tannin, and with mixtures of phenol, alkylphenols, lignin, and tannin have been prepared, where m-cresol, o-cresol, and p-cresol, 2,6-xylenol, mixtures of these, as well as p-tert-butylphenol, 4-isooctylphenol, 4-nonylphenol, and 4-hydroxybiphenyl have been used as alkylphenols.

Instead of formaldehyde, corresponding resins have also been prepared using homologues of formaldehyde, viz., acetaldehyde (AA), propionaldehyde (PA), isobutyraldehyde (BA), with phenol alone, with alkylphenols alone, with lignin alone, with tannin alone, with mixtures of phenol and alkylphenols, with mixtures of phenol and lignin, with mixtures of phenol and tannin, with mixtures of alkylphenols and lignin, with mixture of alkylphenols and tannin, with mixtures of lignin and tannin, as well as with mixtures of phenol, alkylphenols, and lignin, with mixtures of phenol, alkylphenols, and tannin, with mixtures of alkylphenols, lignin, and tannin, and with mixtures of phenol, alkylphenols, lignin, and tannin have been prepared, where m-cresol, o-cresol, and p-cresol, 2,6-xylenol, mixtures of these, as well as p-tert-butylphenol, 4-isooctylphenol, 4-nonylphenol, and 4-hydroxybiphenyl have been used as alkylphenols. Due to their side reactions with bases (aldol reaction), only acid-catalysed condensation can be made with the said higher aldehydes which leads to hard and brittle resins. These resins can be cured like novolaks.

It is also possible to use dialdehydes alone, or together with H to produce addition-condensation resins with activated aromatic compounds.

Sets of resins have been made by using an aqueous solution of glyoxal (hereinafter referred to as "GO") alone, as aldehyde component, and mixtures of H with GO, where mixtures were made with amount of substance-fractions of 20 %, 40 %, 60 %, and 80 % of glyoxal, with amount of substance-fractions of 80 %, 60 %, 40 %, and 20 % of H, with phenol alone, with alkylphenols alone, with lignin alone, with tannin alone, with mixtures of phenol and alkylphenols, with mixtures of phenol and lignin, with mixtures of phenol and tannin, with mixtures of alkylphenols and lignin, with mixture of alkylphenols and tannin, with mixtures of lignin and tannin, as well as with mixtures of phenol, alkylphenols, and lignin, with mixtures of phenol, alkylphenols, and tannin, with mixtures of alkylphenols, lignin, and tannin, and with mixtures of phenol, alkylphenols, lignin, and tannin have been prepared, where m-cresol, o-cresol, and p-cresol, 2,6-xylenol, mixtures of these, as well as p-tert-butylphenol, 4-isooctylphenol, 4-nonylphenol, and 4-hydroxybiphenyl have been used as alkylphenols.

A further set of resins has been made where 2,5-furandialdehyde (hereinafter referred to as "FD") was used as aldehyde component, alone, and in mixture with H, where mixtures were made with amount of substance-fractions of 20 %, 40 %, 60 %, and 80 % of 2,5-furandialdehyde, with amount of substance-fractions of 80 %, 60 %, 40 %, and 20 % of H, with phenol alone, with alkylphenols alone, with lignin alone, with tannin alone, with mixtures of phenol and alkylphenols, with mixtures of phenol and lignin, with mixtures of phenol and tannin, with mixtures of alkylphenols and lignin, with mixture of alkylphenols and tannin, with mixtures of lignin and tannin, as well as with mixtures of phenol, alkylphenols, and lignin, with mixtures of phenol, alkylphenols, and tannin, with mixtures of alkylphenols, lignin, and tannin, and with mixtures of phenol, alkylphenols, lignin, and tannin have been prepared, where m-cresol, o-cresol, and p-cresol, 2,6-xylenol, mixtures of these, as well as p-tert-butylphenol, 4-isooctylphenol, 4-nonylphenol, and 4-hydroxybiphenyl have been used as alkylphenols.

2,5-furandialdehyde can be prepared from HMF by catalytic oxydation or directly from fructose in a one-step dehydration/oxydation (see Dai, J., Green Energy and Environment, https://doi.org/10.1016/j.gee.2020.06.013), and is therefore also a very promising intermediate for resins.

Further sets of resins have been made by using aliphatic dialdehydes (alkanedials, hereinafter referred to as "AD") having from three to eight carbon atoms, viz., from malondialdehyde, succindialdehyde, glutardialdehyde, pimelindialdehyde and octane-dialdehyde, mixtures of these, and also mixtures of H with any of these dialdehydes, or with two or more of these dialdehydes, where mixtures were made with amount of substance-fractions of 20 %, 40 %, 60 %, and 80 % of dialdehyde or dialdehyde mixture, with amount of substance-fractions of 80 %, 60 %, 40 %, and 20 % of H, with phenol alone, with alkylphenols alone, with lignin alone, with tannin alone, with mixtures of phenol and alkylphenols, with mixtures of phenol and lignin, with mixtures of phenol and tannin, with mixtures of alkylphenols and lignin, with mixture of alkylphenols and tannin, with mixtures of lignin and tannin, as well as with mixtures of phenol, alkylphenols, and lignin, with mixtures of phenol, alkylphenols, and tannin, with mixtures of alkylphenols, lignin, and tannin, and with mixtures of phenol, alkylphenols, lignin, and tannin have been prepared, where m-cresol, o-cresol, and p-cresol, 2,6-xylenol, mixtures of these, as well as p-tert-butylphenol, 4-isooctylphenol, 4-nonylphenol, and 4-hydroxybiphenyl have been used as alkylphenols. It has been found that resins made with mixtures of H and these dialdehydes exhibit accelerated curing, compared to resins made with H alone.

Further sets of resins have been prepared from H with amines or amides or mixtures of both, where the amines are selected from the group consisting of aminotriazines having at least two amino groups per molecule which are either primary or secondary amino groups, preferably, melamine, acetoguanamine, butyroguanamine, caprinoguanamine, benzoguanamine, N,N',N"-trimethylmelamine, and the amides are selected from the group consisting of urea, N,N'-dimethylurea, thiourea, ethyleneurea (2-imidazolidinone), propyleneurea (4-methyl-2-imidazolidinone), and glycoluril, and also from amides of aliphatic dicarboxylic acids preferably having from three to fifteen carbon atoms, such as malonic acid diamide, succinic acid diamide, glutaric acid diamide, adipic acid diamide, and also amides of tricarboxylic acids such as citric acid diamide, and further, sulphonamides, such as toluenesulphonic acid amide, cyanamide, and dicyandiamide.

A further set of resins has been made where 2,5-furandialdehyde was used as aldehyde component, alone, and in mixture with H, where mixtures were made with amount of substance-fractions of 20 %, 40 %, 60 %, and 80 % of FD, with amount of substance-fractions of 80 %, 60 %, 40 %, and 20 % of H, with amines or amides or mixtures of both, where the amines are selected from the group consisting of aminotriazines having at least two amino groups per molecule which are either primary or secondary amino groups, preferably, melamine, acetoguanamine, butyroguanamine, caprinoguanamine, benzoguanamine, N,N',N"-trimethylmelamine, and the amides are selected from the group consisting of urea, N,N'-dimethylurea, thiourea, ethyleneurea (2-imidazolidinone), propyleneurea (4-methyl-2-imidazolidinone), and glycoluril, and also from amides of aliphatic dicarboxylic acids preferably having from three to fifteen carbon atoms, such as malonic acid diamide, succinic acid diamide, glutaric acid diamide, adipic acid diamide, and also amides of tricarboxylic acids such as citric acid diamide, and further, sulphonamides, such as toluenesulphonic acid amide, cyanamide, and dicyandiamide.

The most important of these aminoplast formers used in resins mainly together with formaldehyde are melamine and urea, each alone or in combination, while the others mentioned are mostly used as modifiers, or in special applications such as textile finishing. Formaldehyde-free resins based on cyclic ureas and glyoxal have been developed as crosslinkers for coatings.

Mixtures of amino resins and phenolic resins have been used as adhesives in wood products. Similar mixtures have also been made from amino resins based on H. or mixtures thereof with other aldehydes, and resins from activated aromatic compounds as defined hereinbefore, with H or mixtures of H with other aldehydes, particularly FD, GO, AD, and also with formaldehyde, the latter preferably being used in minor quantities to reduce formaldehyde emission during preparation and use of resins made therewith.

The following table illustrates comprehensively the combinations of resin formers considered in this invention.

| | Aldehyde | HMF | R-CHO | OHC-R'-CHO | H+F | H+D | D+F | H+D+F |
|---|---|---|---|---|---|---|---|---|
| Reaktand | | H | F | D | HF | HD | DF | HDF |
| Phenol + subst. phenols | P | PH; | PF | PD | PHF | PHD | PDF | PHDF |
| Amine/Amide | A | AH | AF | AD | AHF | AHD | ADF | AHDF |
| Lignin | L | LH | LF | LD | LHF | LHD | LDF | LHDF |
| Chitosan | C | CH | CF | CD | CHF | CHD | CDF | CHDF |
| Tannin | T | TH | TF | TD | THF | THD | TDF | THDF |
| 2 | PA | PA;H | PA;F | PA;D | PA;HF | PA;HD | PA;DF | PA;HDF |
| 2 | PL | PL;H | PL;F | PL;D | PL;HF | PL;HD | PL;DF | PL;HDF |
| 2 | PC | PC;H | PC;F | PC;D | PC;HF | PC;HD | PC;DF | PC;HDF |
| 2 | AL | AL;H | AL;F | AL;D | AL;HF | AL;HD | AL;DF | AL;HDF |
| 2 | AC | AC;H | AC;F | AC;D | AC;HF | AC;HD | AC;DF | AC;HDF |
| 2 | AT | AT;H | AT;F | AT;D | AT;HF | AT;HD | AT;DF | AT;HDF |
| 2 | LC | LC;H | LC;F | LC;D | LC;HF | LC;HD | LC;DF | LC;HDF |
| 2 | LT | LT;H | LT;F | LT;D | LT;HF | LT;HD | LT;DF | LT;HDF |
| 2 | CT | CT;H | CT;F | CT;D | CT;HF | CT;HD | CT;DF | CT;HDF |
| 3 | PAL | PAL;H | PAL;F | PAL;D | PAL;HF | PAL;HD | PAL;DF | PAL;HDF |
| 3 | PAC | PAC;H | PAC;F | PAC;D | PAC;HF | PAC;HD | PAC;DF | PAC;HDF |
| 3 | PAT | PAT;H | PAT;F | PAT;D | PAT;HF | PAT;HD | PAT;DF | PAT;HDF |
| 3 | PLC | PLC;H | PLC;F | PLC;D | PLC;HF | PLC;HD | PLC;DF | PLC;HDF |
| 3 | PLT | PLT;H | PLT;F | PLT;D | PLT;HF | PLT;HD | PLT;DF | PLT;HDF |
| 3 | PCT | PCT;H | PCT;F | PCT;D | PCT;HF | PCT;HD | PCT;DF | PCT;HDF |
| 3 | ALC | ALC;H | ALC;F | ALC;D | ALC;HF | ALC;HD | ALC;DF | ALC;HDF |
| 3 | ALT | ALT;H | ALT;F | ALT;D | ALT;HF | ALT;HD | ALT;DF | ALT;HDF |
| 3 | ACT | ACT;H | ACT;F | ACT;D | ACT;HF | ACT;HD | ACT;DF | ACT;HDF |
| 3 | LCT | LCT;H | LCT;F | LCT;D | LCT;HF | LCT;HD | LCT;DF | LCT;HDF |
| 4 | PALC | PALC;H | PALC;F | PALC;D | PALC;HF | PALC;HD | PALC;DF | PALC;HDF |
| 4 | PALT | PALT;H | PALT;F | PALT;D | PALT;HF | PALT;HD | PALT;DF | PALT;HDF |
| 4 | PACT | PACT;H | PACT;F | PACT;D | PACT;HF | PACT;HD | PACT;DF | PACT;HDF |
| 4 | PLCT | PLCT;H | PLCT;F | PLCT;D | PLCT;HF | PLCT;HD | PLCT;DF | PLCT;HDF |
| 4 | ALCT | ALCT;H | ALCT;F | ALCT;D | ALCT;HF | ALCT;HD | ALCT;DF | ALCT;HDF |
| 5 | PALCT | PALCT;H | PALCT;F | PALCT;D | PALCT;HF | PALCT;HD | PALCT;DF | PALCT;HDF |

The following embodiments are comprised in this invention:
1. A resin made from an aldehyde component which comprises 5-hydroxymethyl furfural ("HMF"), and a reactive aromatic compound which comprises lignin, characterised in that the HMF is a mixture comprising monomeric 5-hydroxymethyl furfural, and oligomers of HMF wherein the mass fraction of oligomers in the HMF is not more than 1 %, based on the sum of masses of the HMF monomer and the masses of the HMF oligomers present in the said mixture.
2. The resin of embodiment 1 wherein the mass fraction of oligomers in the HMF is not more than 0.05 %, based on the sum of masses of the HMF monomer and the masses of the HMF oligomers present in the said mixture.
3. The resin of embodiment 1 wherein the mass fraction of oligomers in the HMF is not more than 0.01 %, based on the sum of masses of the HMF monomer and the masses of the HMF oligomers present in the said mixture.
4. The resin of any one of embodiments 1, 2, and 3 wherein the reactive aromatic compound comprises a mixture of at least two, preferably at least three lignin components, wherein the first lignin component comprises oligomeric lignin molecules consisting of from 1 to n lignin monomers, the second component comprises oligomeric or polymeric lignin molecules consisting of from n+1 to m lignin monomers, the third component, if present, comprises oligomeric or polymeric lignin molecules consisting of from m+1 to o lignin monomers, and the fourth component, if present, comprises oligomeric or polymeric lignin molecules consisting of from at least o+1 lignin monomers.
5. The resin of embodiment 1 or of embodiment 4 wherein the lignin is any one of hardwood lignin, softwood lignin, and grass lignin.
6. The resin of embodiment 5 wherein the lignin is isolated by any process selected from the group consisting of: the Kraft lignin (or sulphate lignin) process, the alkali lignin (or soda lignin) process, the soda-anthraquinone process, the sulphite pulping prpcess, the acid hydrolysis process, the organosolv process, the hydrolysis process, the steam-explosion process, and the ammonia-fibre expansion process.
7. The resin of embodiment 6 wherein the lignin is purified by at least one method selected from the group consisting of ultrasonic extraction, solvent extraction, dialysis, hot water treatment.
8. The resin of embodiment 6 wherein the reactivity of lignin is increased by at least one of the processes selected from the group consisting of demethylation, methylolation /hydroxymethylation, phenolation/phenolysis, reduction, oxydation, hydrolysis, and alkalation.
9. The resin of any one of embodiments 5 to 8 wherein the reactive aromatic compound comprises a mixture of lignin components, and phenol components selected from the group consisting of phenol, alkylphenols, resorcinol, novolaks, and saligenin.
10. A method of use of the resin of any one of embodiments 1 to 9 as binder.
11. A method of use of the resin of any one of embodiments 1 to 9 as binder in an adhesive.
12. A method of use of the resin of any one of embodiments 1 to 9 as binder in an adhesive for inorganic and organic materials including wood, engineered wood, paper, cardboard, stone, concrete, plaster, thermoplastic and duroplastic polymers, metals, textiles, fibres including also carbon fibres, nonwovens, felts, leather, ceramics, and glass.

### Examples

The aqueous solutions of monomeric 5-HMF as used in these examples have been prepared from freshly distilled HMF (as described in US patent 2,994,645 A issued to R. E. Jones et al).

### Example 1: Resin from Phenol and 5-Hydroxymethylfurfural

A resin kettle equipped with thermometer, stirrer, and a charging funnel for solids was heated to approximately 35 °C, and charged under stirring, in sequence, with 17.87 g of phenol, 0.68 g of aqueous sodium hydroxide solution (mass fraction of solids: 45 %), and 114.16 g of an aqueous solution of monomeric 5-hydroxymethylfurfural (mass fraction of solute 42 %). By distillation under low pressure (between 4 kPa and 5 kPa, corresponding to 40 mbar and 50 mbar) at 35 °C, approximately 50 mL of water were removed from the reaction mixture. The kettle was further stirred and heated to 100 °C to support the reaction which was stopped after a sample drawn showed a dynamic viscosity of between 350 mPa·s and 400 mPa·s, measured in a cone-and-plate viscometer at 20 °C.

70 g of resin were collected, having the following data:

| | |
|---|---|
| dynamic viscosity (conditions as supra): | 381 mPa·s |
| B-time at 130 °C (DIN 16916-2; with HMTA¹): | 50 min 55 s |
| B-time at 150 °C (as supra) | 14 min 37 s |
| mass fraction of non-volatile solids (ISO 3251) | 67.15 % |
| mass fraction of water | 3.8 % |
| water dilutability (ISO 8989 ²) | 0.7 mL/g |
| pH at 23 °C (undiluted) | 5.03 |

| | |
|---|---|
| 1: "HMTA" = hexamethylene tetramine, added in a mass ratio *m*(HMTA)/*m*(Resin) = 10 % 2: Measurement made as described in this standard; however, the value indicated here is the specific volume *β* = *V*(water) / *m*(resin), where *V*(water) is the volume of water added until the cloudiness of the mixture persists from at least 30 s, and *m*(resin) is the mass of the resin sample, with the multiple "mL/g" (millilitre per gramme) of the SI unit for a specific volume (in the standard, the water dilutability is inconsistently defined in section 3 as "the amount of water as mass fraction in percent which is needed to effect a persisting cloudiness of the liquid phenolic resin". The water dilutability is defined in section 9 as *"WM* = (*V*/*m*) × 100 where *V* is the volume in mL of water added, and *m* is the mass of the sample in g". A ratio of a volume and mass is definitely not a mass fraction, nor can it be expressed in a unit "%"; see section 5.3.7, 4^{th} paragraph, of the SI brochure 8 [2006]). | |

### Example 2: Resin from Lignin and 5-Hydroxymethylfurfural

A resin kettle equipped with thermometer, stirrer, and a charging funnel for solids was heated to approximately 35 °C, and charged under stirring, in sequence, with 27.74 g of lignin powder (purified kraft softwood lignin, dark brown powder having a mass fraction of solids of 65 %, a mass fraction of ash after incineration at 700 °C of less than 2 %, and a mass average molar mass of 5 kg/mol, as determined according to G. Sinovyev et al., ChemSusChem 2018, 11, pages 3259 et seq.), 12.92 g of an aqueous solution of sodium hydroxide (mass fraction of solids 45 %), 18.75 g of deionised water, and 114.16 g of an aqueous solution of monomeric 5-hydroxymethylfurfural (mass fraction of solute 42 %). When charging was completed, a sample was taken, and the pH of the reaction mixture at 38 °C was 12.4. The kettle was further stirred and heated to 100 °C to support dissolution and initiate the reaction.

The mixture was then heated under continued stirring to 100 °C, and samples were taken after one-hour intervals each to determine the dynamic viscosity *η* in a cone-and plate viscometer (conditions as supra). The following results were obtained:

| | | | | | | | | | | |
|---|---|---|---|---|---|---|---|---|---|---|
| *t*/min | 0 | 60 | 120 | 180 | 240 | 300 | 360 | 420 | 480 | 540 |
| *η*/(mPa·s) | 12.6 | 43 | 60.8 | 81.6 | 95 | 136 | 173.5 | 230 | 284 | 371 |

The reaction was discontinued after nine hours when a value between 350 mPa·s and 400 mPa·s for a sample taken was reached.

145 g of a yellow-brown resin were removed from the kettle, cooled down to ambient temperature (23 °C) and then stored in a refrigerator at 4 °C. The dynamic viscosity of a sample was 401 mPa·s (conditions as stated supra), and the B-time was measured at 150 °C (111 s) and at 130 °C (148 s). The mass fraction of residual water was determined to be 53.6 %, and the mass fraction of non-volatile material was determined by heating for one hour at 135 °C as 54.3 % (DIN EN ISO 3251). Water dilutability according to DIN EN ISO 8989 was determined as being more than 20 mL/g; pH of an undiluted sample of the resin was 8.9.

### Example 3: Resin from a Lignin Slurry and 5-Hydroxymethylfurfural

A resin kettle equipped with thermometer, stirrer, and a charging funnel for solids was charged, in sequence, with 59.57 g of an aqueous alkaline slurry of lignin having a mass fraction of solids of 30 % which was prepared from Kraft lignin with a mass average molar mass *M*ₘ of about 5 kg/mol, and a mass fraction of ash after incineration at 700 °C of less than 0.5 %, by dispersing 27.96 g of the said Kraft lignin in a mixture of 18.97 g of water and 13.07 g of an aqueous solution of sodium hydroxide having a mass fraction of solids of 50 %, and 114.16 g of an aqueous solution of monomeric 5-hydroxymethylfurfural (mass fraction of solute: 42 %). During charging, the kettle was stirred and heated to 55 °C to support mixing. Measurement of the pH of the mixture after cooling the sample taken to 38 °C yielded a result of 10.7.

The mixture was then heated under continued stirring to 100 °C for nine hours, and samples were taken after one-hour intervals each to determine the dynamic viscosity *η* in a cone-and plate viscometer at 20 °C and a shear rate of 400 s⁻¹. The following results were obtained:

| | | | | | | | | | | |
|---|---|---|---|---|---|---|---|---|---|---|
| *t*/min | 0 | 60 | 120 | 180 | 240 | 300 | 360 | 420 | 480 | 540 |
| *η*/(mPa·s) | | 41 | 59 | 82 | 114 | 151 | 198 | 310 | 416 | 544 |

155 g of a yellow-brown resin were removed from the kettle, cooled down to ambient temperature (23 °C) and then stored in a refrigerator at 4 °C. The dynamic viscosity of a sample was 559 mPa·s (conditions as stated supra), and the B-time was measured at 150 °C (105 s) and at 130 °C (163 s). The mass fraction of residual water was determined to be 56.16 %, and the mass fraction of non-volatile material was determined by heating for one hour at 135 °C as 44.8 %. Water dilutability was determined according to DIN EN ISO 8989 as more than 20 ml/g; pH of an undiluted sample of the resin was 8.91.

### Example 4: Preparation of Plywood

One set each of three layers of beech veneers were coated on one side with the resins of examples 1, 2, and 3, the areic mass of the resin having been chosen in each case as 200 g/m².

In the case of the resin of example 1, hexamethylenetetramine was added (as in the determination of B time, see example 1). A decor layer was combined on top of each of the three sets, and these piles were then pressed for ten minutes at 140 °C with a pressure of 20 bar (2 MPa). Stable plywood plates were produced in all cases.

## Claims

1. A resin made from an aldehyde component which comprises 5-hydroxymethyl furfural ("HMF"), and a reactive aromatic compound which comprises lignin, **characterised in that** the HMF is a mixture comprising monomeric 5-hydroxymethyl furfural, and oligomers of HMF wherein the mass fraction of oligomers in the HMF is not more than 1 %, based on the sum of masses of the HMF monomer and the masses of the HMF oligomers present in the said mixture.

2. The resin of claim 1 wherein the mass fraction of oligomers in the HMF is not more than 0.05 %, based on the sum of masses of the HMF monomer and the masses of the HMF oligomers present in the said mixture.

3. The resin of claim 1 wherein the mass fraction of oligomers in the HMF is not more than 0.01 %, based on the sum of masses of the HMF monomer and the masses of the HMF oligomers present in the said mixture.

4. The resin of any one of claims 1, 2, and 3 wherein the reactive aromatic compound comprises a mixture of at least two, preferably at least three lignin components, wherein the first lignin component comprises oligomeric lignin molecules consisting of from 1 to n lignin monomers, the second component comprises oligomeric or polymeric lignin molecules consisting of from n+1 to m lignin monomers, the third component, if present, comprises oligomeric or polymeric lignin molecules consisting of from m+1 to o lignin monomers, and the fourth component, if present, comprises oligomeric or polymeric lignin molecules consisting of from at least o+1 lignin monomers.

5. The resin of claim 1 or of claim 4 wherein the lignin is any one of hardwood lignin, softwood lignin, and grass lignin.

6. The resin of claim 5 wherein the lignin is isolated by any process selected from the group consisting of: the Kraft lignin (or sulphate lignin) process, the alkali lignin (or soda lignin) process, the soda-anthraquinone process, the sulphite pulping prpcess, the acid hydrolysis process, the organosolv process, the hydrolysis process, the steam-explosion process, and the ammonia-fibre expansion process.

7. The resin of claim 6 wherein the lignin is purified by at least one method selected from the group consisting of ultrasonic extraction, solvent extraction, dialysis, hot water treatment.

8. The resin of claim 6 wherein the reactivity of lignin is increased by at least one of the processes selected from the group consisting of demethylation, methylolation /hydroxy-methylation, phenolation/phenolysis, reduction, oxydation, hydrolysis, and alkalation.

9. The resin of any one of claims 5 to 8 wherein the reactive aromatic compound comprises a mixture of lignin components, and phenol components selected from the group consisting of phenol, alkylphenols, resorcinol, novolaks, and saligenin.

10. A method of use of the resin of any one of claims 1 to 9 as binder.

11. A method of use of the resin of any one of claims 1 to 9 as binder in an adhesive.

12. A method of use of the resin of any one of claims 1 to 9 as binder in an adhesive for inorganic and organic materials including wood, engineered wood, paper, cardboard, stone, concrete, plaster, thermoplastic and duroplastic polymers, metals, textiles, fibres including also carbon fibres, nonwovens, felts, leather, ceramics, and glass.
